# EUROPÄISCHE PATENTANMELDUNG

(11) **EP 3 925 809 A1**
(43) Veröffentlichungstag der Anmeldung: **22.12.2021**
(21) Anmeldenummer: 21181184.9
(22) Anmeldetag: 15.09.2017
(51) Int. Cl.: B60K 6/48

(54) **ANTRIEBSSTRANGSYSTEM**

(30) Priorität: 15.09.2016 DE 102016217616
(62) Teilanmeldung aus: 17191317.1
(71) Anmelder: Deere & Company, Moline, IL 61265 (US)
(72) Erfinder: WOOPEN, Thomas, 68163 Mannheim (DE)
(74) Vertreter: Stein, Stefan

(57) **Zusammenfassung**

Antriebsstrangsystem wenigstens einen Verbrennungsmotor, wenigstens einen Generator, zur Erzeugung elektrischer Energie, angetrieben durch den Verbrennungsmotor, wenigstens eine elektrische Maschine, die elektrisch mit dem Generator verbunden ist, wenigstens jeweils eine angetriebene Vorder- und Hinterachse, die jeweils Abtriebsmittel aufweisen und die durch den Verbrennungsmotor angetrieben sind, wenigstens ein Schalt-/Automatikgetriebe, das im Antriebsstrang zwischen dem Verbrennungsmotor und den jeweiligen Achsen vorgesehen ist und wenigstens ein Umlaufrädergetriebe aufweisen.

## Beschreibung

Die Erfindung betrifft ein Antriebsstrangsystem zum Bereitstellen von Antriebsleistung für ein Fahrzeug, insbesondere für ein landwirtschaftliches Fahrzeug.

Ein Antriebsstrang besteht aus einem Antrieb und mechanischen Komponenten, wie eine Kurbelwelle, ein Getriebe, ein Differential, welche die Leistung des Antriebs bis auf den Fahruntergrund übertragen. Beim Antrieb kann es sich um einen Verbrennungsmotor oder einen Elektromotor handeln, oder eine sogenannte Hybridlösung.

US2015/0210151 A1 beschreibt einen Traktor mit einer Batterie in Verbindung mit einem elektrischen Generator und einem Elektromotor, und mit einem ersten Motor / Generator, der mit dem Motor verbunden ist, und mit dem die Batterie verbunden ist. Der erste Motor / Generator kann als ein Motor betrieben werden, so dass die Abtriebswelle mindestens teilweise durch elektrische Energie von der Batterie gespeist wird.

In landwirtschaftlichen Fahrzeugen besteht der Bedarf, den Antrieb flexibel an Leistungsanforderungen anzupassen und gleichzeitig den Fahrkomfort zu erhöhen.

Es ist somit eine Aufgabe der vorliegenden Erfindung, die Flexibilität der Leistungsanpassung zu verbessern.

Eine weitere Aufgabe ist die Verbesserung des Fahrkomforts.

Eine weitere Aufgabe ist die Erhöhung der Sicherheit beim Betrieb des Fahrzeugs.

Ausführungen der Erfindung ergeben sich nach dem Hauptanspruch, sowie den weiteren nebengestellten und abhängigen Ansprüchen.

In einer Ausführung kann das Antriebsstrangsystem wenigstens einen Verbrennungsmotor, wenigstens einen Generator, zur Erzeugung elektrischer Energie, angetrieben durch den Verbrennungsmotor, wenigstens eine elektrische Maschine, die elektrisch mit dem Generator verbunden ist, wenigstens jeweils eine angetriebene Vorder- und Hinterachse, die jeweils Abtriebsmittel aufweisen und die durch den Verbrennungsmotor angetrieben sind, wenigstens ein Schalt-/Automatikgetriebe, das im Antriebsstrang zwischen dem Verbrennungsmotor und den jeweiligen Achsen vorgesehen ist und wenigstens ein Umlaufrädergetriebe aufweisen. Das Umlaufrädergetriebe ist mit den Abtriebsmitteln der Vorderachse, mit der elektrischen Maschine und über das Schalt-/Automatikgetriebe mit dem Verbrennungsmotor verbunden, so dass die Antriebskraft des Verbrennungsmotors und der elektrischen Maschine im Umlaufrädergetriebe summiert und an die Abtriebsmittel der Vorderachse geleitet wird, und die Abtriebsmittel der Vorderachse durch den Verbrennungsmotor und durch die elektrische Maschine gleichzeitig angetrieben sind.

Durch die angetriebene Vorder- und Hinterachse wird ein Vierrad-Antrieb sichergestellt. Jedoch können auch, je nach vorhandener Achsanzahl mehr als vier Räder oder Kettenräder angetrieben sein.

Mit dem Antriebsstrangsystem kann die Antriebsleistung in Form von elektrischer und von mechanischer Leistung an die Vorderachse geleitet werden. Dabei überlagern sich beide Leistungspfade im Umlaufrädergetriebe. Bei jeglicher Umsetzung von mechanischer Energie in elektrische Energie findet ein Leistungsverlust aufgrund der auftretenden elektrischen Verluste im Generator statt. Im Vergleich zu einem rein elektrischen Antriebsstrangsystem kann der Wirkungsgrad des Systems erhöht werden, da ein Anteil der Antriebsleistung über einen mechanischen Leistungspfad an die Vorderachse geleitet wird.

Die elektrische Maschine und der elektrische Leistungspfad sind nicht dazu vorgesehen, das Fahrzeug ohne den mechanischen Leistungspfad anzutreiben, sondern diesen zu unterstützen. Somit kann die elektrische Maschine verkleinert werden, wobei gleichzeitig das Gewicht reduziert wird.

Das Umlaufrädergetriebe ist im Antriebsstrang vom Verbrennungsmotor ausgehend hinter dem Schalt-/Automatikgetriebe vorgesehen. Hierdurch wird die Gesamtleistung, bestehend aus der elektrischen und der mechanischen Leistung, an ein Vorderachsdifferential geleitet. Im Anschluss kann die Gesamtleistung an die Abtriebsmittel weitergegeben werden. Die elektrische Leistung wird nicht durch das Schalt-/Automatikgetriebe geleitet, welches somit für eine kleinere Leistungsanforderung ausgelegt werden kann. Dadurch kann das Schalt-/Automatikgetriebe eine kleinere Baugröße einnehmen und hat ein geringeres Gewicht.

Es kann eine Boostfunktion umgesetzt werden, welche im Bedarfsfall über die elektrische Maschine eine zusätzliche kurzzeitig erhöhte elektrische Leistung auf die Vorderachse leitet. Die Boostfunktion erfolgt auf dem elektrischen Leistungspfad und wird nicht über das Schalt-/Automatikgetriebe geleitet, welches dadurch geringeren Verschleiß aufweisen kann und eine höhere Lebensdauer erreichen kann. Die Boostfunktion ermöglicht es, im Fall von kurzfristig benötigter Antriebsleistung, einen zusätzlichen Anteil der Leistung auf dem elektrischen Leistungspfad zur derzeitig anliegenden Anteil elektrischen Antriebsleistung hinzuzufügen.

Eine weitere Ausführung betrifft ein Antriebsstrangsystem, das wenigstens einen Verbrennungsmotor, wenigstens einen Generator, zur Erzeugung elektrischer Energie, angetrieben durch den Verbrennungsmotor, wenigstens zwei elektrische Maschinen, die mit dem Generator verbunden sind, wenigstens je eine angetriebene Vorder- und Hinterachse, die jeweils Abtriebsmittel aufweisen, und die durch den Verbrennungsmotor angetrieben sind, wenigstens ein Getriebe, das im Antriebsstrang zwischen dem Verbrennungsmotor und den jeweiligen Achsen vorgesehen ist, und wenigstens zwei Umlaufrädergetriebe aufweisen kann. Die Umlaufrädergetriebe sind jeweils mit den Abtriebsmitteln der Vorderachse, mit einem Vorderachsdifferential und mit jeweils einer der elektrischen Maschinen verbunden. Die Antriebskraft des Verbrennungsmotors und der elektrischen Maschinen wird im jeweiligen Umlaufrädergetriebe summiert und an die jeweiligen Abtriebsmittel der Vorderachse geleitet und die Abtriebsmittel der Vorderachse sind durch den Verbrennungsmotor und durch die elektrischen Maschinen gleichzeitig angetrieben.

Mit dem Antriebsstrangsystem kann die Antriebsleistung in Form von elektrischer und von mechanischer Leistung an die Vorderachse geleitet werden. Beide Leistungsarten überlagern sich im Umlaufrädergetriebe. Bei jeglicher Umsetzung von mechanischer Energie in elektrische Energie findet ein Leistungsverlust aufgrund der auftretenden elektrischen Verluste im Generator statt. Im Vergleich zu einem rein elektrischen Antriebsstrangsystem kann der Wirkungsgrad des Systems erhöht werden, da ein Anteil der Antriebsleistung über einen mechanischen Pfad an die Vorderachse geleitet wird.

Die elektrische Maschine ist nicht zum alleinigen Betrieb der Vorderachse vorgesehen. Somit kann die elektrische Maschine verkleinert werden, wobei gleichzeitig das Gewicht reduziert wird.

Die Umlaufrädergetriebe sind im Antriebsstrang vom Verbrennungsmotor ausgehend hinter einem Vorderachsdifferential vorgesehen. Jedes Umlaufrädergetriebe kann mit den Abtriebsmitteln einer Fahrzeugseite der Vorderachse verbunden sein. Die Gesamtleistung von elektrischer und mechanischer Leistung wird hinter dem Vorderachsdifferential zur Verfügung gestellt. Im Falle einer Boostfunktion können die Abtriebsmittel mit einer kurzzeitig erhöhten elektrischen Leistung direkt versorgt werden. Das Vorderachsdifferential und das Schalt-/Automatikgetriebe können für eine kleinere Leistung ausgelegt werden und diese können eine kleinere Baugröße sowie ein geringeres Gewicht aufweisen.

Bei einer weiteren Ausführung können der Generator und wenigstens eine elektrische Maschine mit wenigstens einem Energiespeicher, einem Akkumulator oder einer Batterie verbunden sein.

Durch das Verbinden kann der Generator den Energiespeicher aufladen und elektrische Energie für eine spätere Verwendung speichern. In einem Betriebsmodus, in dem nur eine geringe elektrische Leistung im Abtrieb benötigt wird, kann daher die elektrische Leistung wenigstens teilweise in den Energiespeicher, den Akkumulator oder die Batterie geleitet werden. Diese steht für einen späteren Abruf bei Leistungsbedarf zur Verfügung.

In einer weiteren Ausführung kann eine Steuerung vorgesehen sein, die dazu ausgelegt ist, das Umlaufrädergetriebe zu steuern.

Die Steuerung regelt die Relativdrehzahl einzelner Komponenten des Umlaufrädergetriebes. Die Summierung von elektrischer und mechanischer Leistung kann eingestellt werden. Es kann im Bedarfsfall eine Boostfunktion realisiert werden, die kurzzeitig eine hohe elektrische Leistung zur Verfügung stellt.

Durch die Steuerung kann die Leistungsverteilung zwischen der Vorder- und der Hinterachse geregelt werden. Es ist somit möglich, eine flexible Leistungsverteilung zu realisieren, die an den aktuellen Lastfall angepasst ist. Dies kann durch das Einstellen der Relativdrehzahlen des Umlaufrädergetriebes erfolgen. Es kann beliebig zwischen einem Drei-Wellen-Betrieb und einem Zwei-Wellen-Betrieb umgeschaltet werden.

Bei einer weiteren Ausführung kann das Umlaufrädergetriebe ein Planetengetriebe sein.

Mit dem Planetengetriebe kann hohes Drehmoment übertragen werden. Die Steuerung kann über die Regelung eines Hohlrads oder eines Planetenträgers realisiert werden. Durch das Einstellen der Relativdrehzahlen der Komponenten des Planetengetriebes kann der Anteil der elektrischen Leistung und die Leistungsverteilung zwischen Vorder- und Hinterachse beeinflusst werden.

In einer weiteren Ausführung können die Abtriebsmittel Endgetriebe in Form von einem Umlaufrädergetriebe, Differentialgetriebe oder Stirnradgetriebe aufweisen.

Die Abtriebsmittel sind in den Radnaben oder Kettenradnaben vorgesehen und dienen zur Untersetzung der Eingangsdrehzahl, um eine weitere Drehmomenterhöhung in den Rädern oder Kettenrädern zu erzeugen. Der Antriebsstrang kann eine hohe Spreizung des Antriebsmoments sicherstellen und erlaubt einen breiten Anwendungsbereich für hohe Zuglasten.

Bei einer Ausführung kann das Antriebsstrangsystem derart ausgelegt sein, dass bei einem Bremsvorgang eine Rekuperation der Antriebsleistung erfolgt. Es kann ein Anteil der durch den Bremsvorgang anfallenden Leistung mittels der elektrischen Maschine wieder in elektrischen Strom umgewandelt werden. Die elektrische Maschine im Generatormodus erzeugt aus der durch den Bremsvorgang anliegenden Drehzahl und dem anliegenden Drehmoment Strom, der an den Energiespeicher weitergeleitet werden kann. Somit steht ein Teil der Bremsleistung zu einem späteren Zeitpunkt erneut zur Verfügung.

Eine Ausführung betrifft ein Verfahren zur Steuerung eines Antriebsstrangsystems, das wenigstens einen Verbrennungsmotor, wenigstens einen Generator, zur Erzeugung elektrischer Energie, angetrieben durch den Verbrennungsmotor, wenigstens eine elektrische Maschine, die elektrisch mit dem Generator verbunden ist, wenigstens eine angetriebene Vorder- und Hinterachse, die jeweils Abtriebsmittel aufweisen, und die durch den Verbrennungsmotor angetrieben sind, wenigstens ein Schalt-/Automatikgetriebe, das im Antriebsstrang zwischen dem Verbrennungsmotor und den jeweiligen Achsen vorgesehen ist, wenigstens ein Umlaufrädergetriebe, das mit den Abtriebsmitteln der Vorderachse, mit der elektrischen Maschine und über das Schalt-/Automatikgetriebe mit dem Verbrennungsmotor verbunden ist, aufweist. Das Umlaufrädergetriebe kann derart gesteuert sein, dass eine Antriebsleistung an die Abtriebsmittel abgegeben wird, oder eine Antriebsleistung von den Abtriebsmitteln an die elektrische Maschine abgegeben wird.

Mit dem Verfahren kann die Antriebsleistung in Form von elektrischer und von mechanischer Leistung an die Vorderachse geleitet werden. Dabei überlagern sich beide Leistungsarten im Umlaufrädergetriebe. Bei jeglicher Umsetzung von mechanischer Energie in elektrische Energie findet ein Leistungsverlust statt aufgrund der auftretenden elektrischen Verluste im Generator. Im Vergleich zu einem rein elektrischen Verfahren kann dadurch der Wirkungsgrad des Systems erhöht werden, da ein Anteil der Antriebsleistung über einen mechanischen Pfad an die Vorderachse geleitet wird.

Durch das Verfahren kann eine Boostfunktion umgesetzt werden, welche im Bedarfsfall über die elektrische Maschine eine zusätzliche, kurzzeitig erhöhte elektrische Leistung auf die Vorderachse leitet. Die Boostfunktion belastet nicht das Schalt-/Automatikgetriebe, welches dadurch einen geringeren Verschleiß aufweist und eine höhere Lebensdauer.

Es ist möglich, die Antriebsleistung zwischen der Vorder- und der Hinterachse mittels einer Steuerung des Umlaufrädergetriebes einzustellen und somit stets eine an die Fahrbedingungen angepasste Leistungsverteilung zu erreichen.

Bei einer weiteren Ausführung können die Abtriebsmittel der Vorderachse unabhängig voneinander und von der Hinterachse regelbar sein, insbesondere beschleunigbar und abbremsbar sein.

Es ist möglich, die Vorderachse mit einer unterschiedlichen Drehzahl als die Hinterachse zu betreiben. Durch eine unterschiedliche Drehzahl kann das Kurvenfahrverhalten aktiv beeinflusst werden, so dass ein kleinerer Kurvenradius durch das Fahrzeug eingehalten werden kann.

Bei der Verwendung von wenigstens zwei elektrischen Maschinen kann das Verfahren beide Vorderräder bei unterschiedlichen Drehzahlen oder unterschiedlichen Drehmomenten betreiben. Dadurch kann ein Vorderrad gezielt gebremst oder beschleunigt werden. Dieses Verfahren kann zur Stabilisierung des Fahrzeugs bei kritischen Fahrzuständen benutzt werden.

In einer weiteren Ausführung kann die Antriebsleistungsaufteilung auf die Abtriebsmittel der Vorder- und der Hinterachse regulierbar sein.

Die Aufteilung der Antriebsleistung erlaubt über den Vierradantrieb hinaus die Stabilisierung des Fahrzeugs. Bei unterschiedlichem Untergrund mit wechselndem Rad-Boden-Kontakt, wie etwa Erdreich, und bei unterschiedlichen Steigungen, kann eine verbesserte Zugleistung des Fahrzeugs erreicht werden.

Weitere Ausführungen werden anhand der Figuren beschrieben. Dabei zeigt
Figur 1 ein Fahrzeug für das Antriebsstrangsystem nach einer Ausführung,
Figur 2 ein Antriebsstrangsystem für ein Fahrzeug nach einer weiteren Ausführung,
Figur 3 ein Antriebsstrangsystem nach einer weiteren Ausführung.

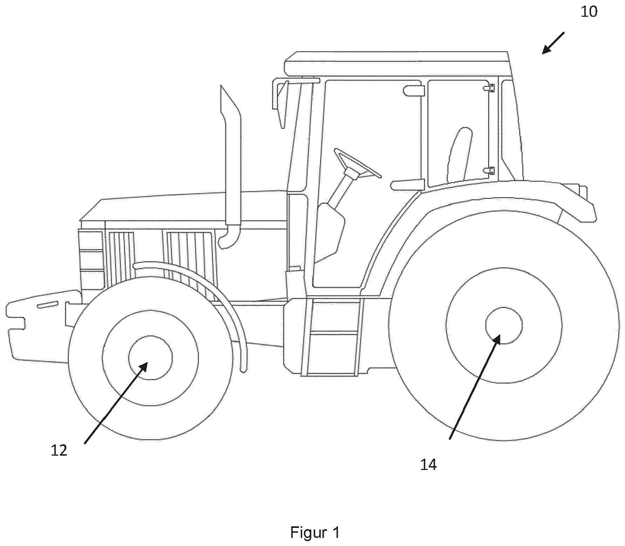

Eine Ausführung kann in einem in **Figur 1** gezeigten Traktor 10 verwendet werden. Ein üblicher Traktor 10 nach Figur 1 weist einen Verbrennungsmotor 21 auf, und jeweils eine Vorder- und Hinterachse. An den Achsen befinden sich Räder, jedoch kann es auch vorgesehen sein, statt Rädern Ketten- oder Raupenantriebe vorzusehen.

Das Antriebsstrangsystem 20 ist dazu geeignet, in einer Feldspritze, einer Baumaschine, oder einem weiteren landwirtschaftlichen Fahrzeug verwendet zu werden. Weiterhin ist es möglich, eine Ausführung des Antriebsstrangsystems 20 nicht nur mit zwei Achsen, sondern mit wenigstens zwei Hinterachsen zu betreiben. Gerade in diesen Anwendungsbereichen kann es vorteilhaft sein, wenn durch eine Ausführung des Antriebsstrangsystems 20 eine zusätzliche elektrisch erzeugte Antriebsleistung im Bedarfsfall auf die Vorderräder aufgebracht werden kann.

Durch das Antriebsstrangsystem 20 wird sowohl die Vorderachse 12, als auch die Hinterachse 14, durch den mechanischen Leistungspfad angetrieben, so dass die mechanisch erzeugte Leistung des Verbrennungsmotors 21 mittels eines Schalt-/Automatikgetriebes 30, einem Vorderachsdifferential 27 und einem Hinterachsdifferential 29 an die Räder geleitet wird.

Durch das Antriebsstrangsystems 20 werden die Vorderräder zusätzlich mit einer auf elektrischem Wege erzeugten Leistung beaufschlagt. Hierfür ist ein Generator 22 vorgesehen, der mechanisch mit dem Verbrennungsmotor 21 verbunden ist. Durch die Antriebsleistung des Verbrennungsmotors 21 erzeugt der Generator 22 elektrischen Strom, welcher dann für eine zusätzliche Leistungsbeaufschlagung der Vorderachse 12 zur Verfügung gestellt wird.

Dabei kann der elektrische Strom zunächst in einem Energiespeicher 34 gespeichert werden, bevor dieser im Anwendungsfall zur Leistungsgenerierung verwendet wird. Es kann jedoch auch vorgesehen sein, keinen Energiespeicher 34 unterzubringen, so dass der elektrische Strom vom Generator 22 direkt zur Leistungserzeugung genutzt wird.

Der elektrische Strom wird vom Generator 22 oder vom Energiespeicher 34 kommend an eine oder mehrere elektrische Maschinen 23, 24 weitergeleitet, welche aus dem elektrischen Strom wiederum Antriebsleistung erzeugen und somit die Vorderachse 12 zusätzlich zu der Leistung des mechanischen Pfades mit einer Leistung aus dem elektrischen Pfad beaufschlagen.

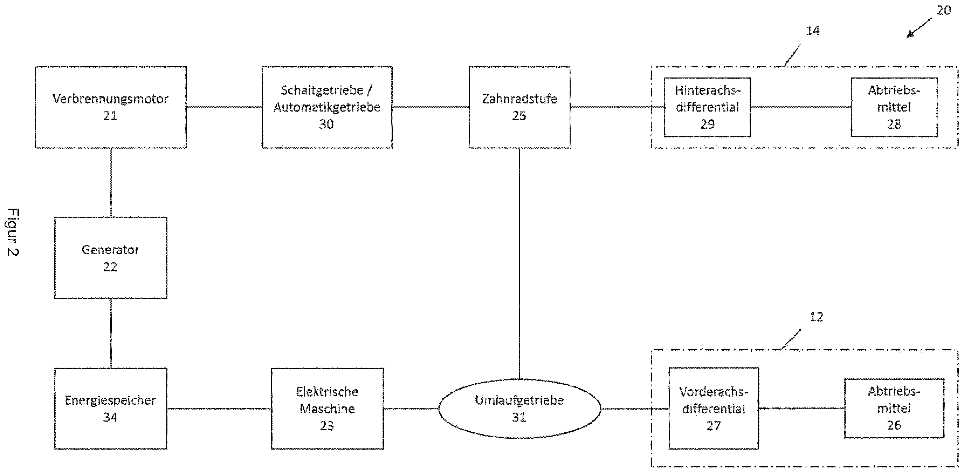

**Figur 2** zeigt eine Ausführung des erfindungsgemäßen Antriebsstrangsystems 20. Das Antriebsstrangsystem weist dabei einen Verbrennungsmotor 21 auf. In Verbindung mit dem Verbrennungsmotor 21 ist weiterhin ein Schalt-oder Automatikgetriebe 30 vorgesehen. Das Getriebe 30 dient dazu, die Leistung in Drehmoment und Drehzahl an den Bedarfsfall anzupassen. Durch eine Zahnradstufe 25 wird die mechanisch erzeugte Leistung des Verbrennungsmotors 21 auf einen Vorderachs- und/oder Hinterachsantrieb aufgeteilt. Der Antrieb der Hinterachse 14 weist dabei üblicherweise ein Hinterachsdifferential 29 auf, an das die Abtriebsmittel 28 der Hinterachse angeschlossen sind. Dabei können die Abtriebsmittel aus einem Differenzialgetriebe, einem Planetengetriebe oder einem Umlaufrädergetriebe bestehen, und dienen dazu, die Drehzahl und/oder das Drehmoment nochmals zu modifizieren, bevor es an die Räder geleitet wird.

Der mechanische Leistungspfad für die Vorderachse 12 weist im Anschluss an die Zahnradstufe 25 ein Umlaufrädergetriebe 31 auf. Das Umlaufrädergetriebe 31 dient dazu, die Leistung aus dem mechanischen Pfad und aus dem elektrischen Pfad zu summieren und an ein Vorderachsdifferential 27 zu leiten. Ausgehend vom Vorderachsdifferential 27 wird die Leistung an die Abtriebsmittel 26 der Vorderachse weitergeleitet. Diese haben die gleiche Funktion wie die Abtriebsmittel 28 der Hinterachse.

Durch den Verbrennungsmotor 21 wird ein Generator 22 angetrieben, der mechanisch mit dem Verbrennungsmotor 21 verbunden ist. Der Generator 22 kann dabei ein Elektromotor üblicher Bauart sein, oder ein Generator spezieller Bauart, wie etwa ein Klauenpolgenerator. Der Generator 22 erzeugt elektrischen Strom, der an einen Energiespeicher 34 weitergeleitet und dort gespeichert werden kann. Der Energiespeicher kann dabei eine übliche Batterie oder ein Akkumulator sein.

Eine elektrische Maschine 23 ist an den Energiespeicher 34 angeschlossen und wird von diesem mit elektrischer Leistung versorgt oder direkt vom Generator 22. Die elektrische Maschine 23 kann als Motor betrieben werden, wobei durch die elektrische Leistung ein Antriebsmoment erzeugt wird. Weiterhin kann die elektrische Maschine 23 auch als Generator betrieben werden, sodass durch das Einleiten von mechanischer Leistung in die elektrische Maschine 23 ein elektrischer Strom erzeugt werden kann.

Die elektrische Maschine 23 ist auf ihrer mechanischen Seite mit dem Umlaufrädergetriebe 31 verbunden. In dem Umlaufrädergetriebe 31 wird daher der mechanische Leistungspfad mit dem elektrischen Leistungspfad, der durch die elektrische Maschine 23 zur Verfügung gestellt wird, addiert und an die Vorderachse 12 geleitet.

Das Umlaufrädergetriebe 31 kann in Form eines Planetengetriebes ausgeführt sein. Das Umlaufrädergetriebe 31 kann im Zweiwellen- oder Dreiwellenbetrieb genutzt werden. Hierdurch ist es möglich, je nach Bedarfsfall zusätzlich die Leistung aus dem elektrischen Pfad wahlweise zu dosieren. Die elektrische Maschine 23 wird durch eine Steuerung 33 gesteuert, so dass die elektrische Maschine 23 durch ihren elektrischen Antrieb das Umlaufrädergetriebe 31 derart beeinflussen kann, dass die Leistung bedarfsgerecht summiert wird. Je nach Drehzahlunterschied der einzelnen Wellen des Umlaufrädergetriebes kann der Faktor der Summierung bestimmt werden.

Die Steuerung 33 kann dazu verwendet werden, den Generator 22 zu steuern, so dass dieser je nach Bedarfsfall abgeschaltet werden kann.

Durch den elektrischen Leistungspfad kann mithilfe der Steuerung 33 im Bedarfsfall zusätzliche elektrische Leistung auf die Vorderachse 12 geleitet werden. Der elektrische Leistungspfad führt nicht über das Getriebe 30, sodass dieses durch die summierte Leistung nicht belastet wird, sondern stets durch den mechanischen Leistungspfad, welcher ausschließlich durch den Verbrennungsmotor mechanisch angetrieben ist.

Durch die Steuerung des Umlaufrädergetriebes 31 kann auch eine Leistungsverteilung zwischen der Vorderachse 12 und der Hinterachse 14 erreicht werden. Durch die aktive Steuerung des Umlaufrädergetriebes 31 kann im Bedarfsfall die Leistung von der Vorderachse 12 auf die Hinterachse 14 umverteilt werden. Die Leistungsverteilung zwischen der Vorder- und der Hinterachse kann bedarfsgerecht gesteuert sein. Als Standardantrieb des Fahrzeugs kann die andauernde gleichzeitige Nutzung des elektrischen und des mechanischen Leistungspfades vorgesehen sein bei einer sich verändernden Leistungsverteilung zwischen der Vorder- und der Hinterachse.

Mit der zusätzlichen elektrischen Leistung kann die Vorderachse mit einem Prerun ausgestattet werden. Die Abtriebsmittel der Vorderachse 12 drehen dabei mit einer höheren oder niedrigeren Drehzahl als diejenigen der Hinterachse. Das Fahrzeug kann damit bei Kurvenfahrt ein besseres Ansprechverhalten aufweisen. Durch eine niedrigere Drehzahl kann ein besseres Abbremsverhalten des Fahrzeugs erreicht werden, gerade auch bei höheren Geschwindigkeiten oder bei einer hohen anhängigen Last.

Beim Abbremsvorgang kann ein Anteil der Leistung durch die elektrische Maschine 23 im Generatorbetrieb in elektrischen Strom gewandelt und im Energiespeicher 34 gespeichert werden.

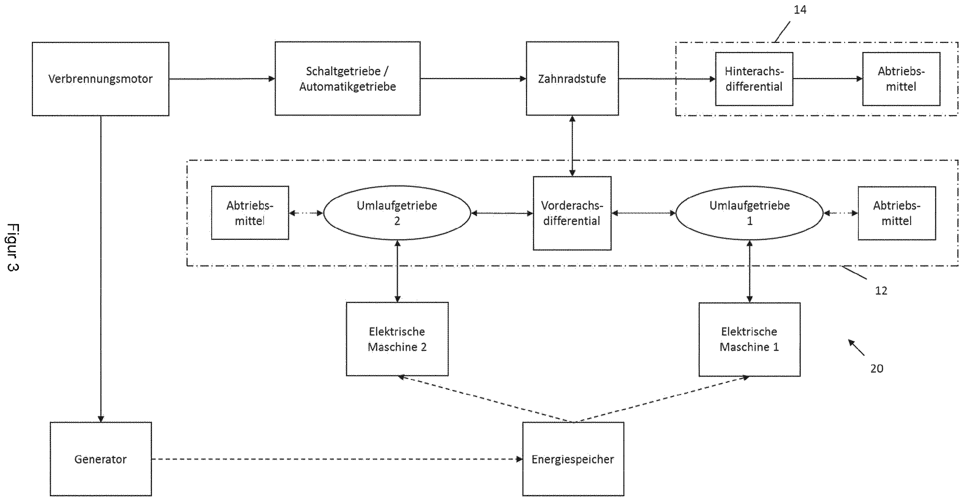

**Figur 3** zeigt eine weitere Ausführung des Antriebsstrangsystems. Dabei unterscheidet sich diese Ausführung von derjenigen nach Figur 2 durch die Verwendung von zwei Umlaufrädergetrieben 31, 32.

Entsprechend der Ausführung nach Figur 1 wird durch den Verbrennungsmotor 21 ein Generator 22 zur Erzeugung von elektrischem Strom angetrieben. Der Verbrennungsmotor 21 erzeugt mechanische Leistung, die über ein Schalt-/Automatikgetriebe 30 und über eine Zahnradstufe 25 eines Vierradantriebs an eine Vorder- und Hinterachse 12, 14 geleitet wird. Mit der Zahnradstufe 25 ist ein Vorderachsdifferential 27 verbunden, welches wiederum an zwei Umlaufrädergetriebe 31, 32 angeschlossen ist. Durch das Vorderachsdifferential 27 wird die Leistung in die zwei Umlaufrädergetriebe 31, 32 eingeleitet.

Der Generator 22 kann mit einem Energiespeicher 34 verbunden sein. Dadurch kann elektrische Leistung für einen späteren Anwendungsfall gespeichert werden. Der Energiespeicher 34 und der Generator 22 sind mit zwei elektrischen Maschinen 23, 24 verbunden, so dass die elektrische Energie an die elektrischen Maschinen 23, 24 geleitet werden kann. Die elektrischen Maschinen 23, 24 sind mit einer Steuerung 33 verbunden. Durch die zwei Umlaufrädergetriebe 31, 32 wird auf beiden Seiten der Vorderachse 12 der elektrische Leistungspfad mit dem mechanischen Leistungspfad überlagert und an die Abtriebsmittel 26 weitergeleitet. Dadurch kann, wie in der Ausführung nach Figur 1, elektrische Leistung zusätzlich für den Antrieb der Vorderachse 12 genutzt werden.

Durch die zwei Umlaufrädergetriebe 31, 32 und die zwei elektrischen Maschinen 23, 24 können beide Seiten der Vorderachse 12 des Fahrzeugs unabhängig voneinander gesteuert werden. Je nach erforderlicher Fahrsituation kann eine Seite des Fahrzeugs mit mehr oder weniger Antriebsleistung versorgt werden, wodurch ein aktives Lenken realisiert werden kann. Durch das gezielte Beschleunigen und Abbremsen kann auch bei hoher Geschwindigkeit die Fahrstabilität erhöht werden.

Bei auftretenden Seitenkräften oder instabilen Fahrzuständen kann durch eine Drehzahl/Drehmomentanpassung auf beiden Seiten der Vorderachse 12 ein stabilisierender Zustand hergestellt werden. Gerade im landwirtschaftlichen Bereich mit hohen Anhängelasten kann die Fahrsicherheit erhöht werden. Durch ein aktives Lenkunterstützen oder durch ein aktives Abbremsen kann das Fahrzeug stets in einen sicheren dynamischen Bereich zurückgeleitet werden.

Durch die Ausführungen des Antriebsstrangsystems 20 kann während dem Schaltvorgang des Schalt-/Automatikgetriebes 30 eine Zugkraftunterbrechung vermieden werden. Während der mechanische Leistungspfad durch den Schaltvorgang unterbrochen wird, erfolgt eine konstante Leistungsbereitstellung über den elektrischen Leistungspfad.

## Patentansprüche

1. Antriebsstrangsystem (20),
aufweisend wenigstens einen Verbrennungsmotor (21),
wenigstens einen Generator (22), zur Erzeugung elektrischer Energie, angetrieben durch den Verbrennungsmotor (21),
wenigstens eine elektrische Maschine (23), die elektrisch mit dem Generator (22) verbunden ist,
wenigstens eine angetriebene Vorder- und Hinterachse (12, 14), die jeweils Abtriebsmittel (26, 28) aufweisen, und die durch den Verbrennungsmotor (21) angetrieben sind,
wenigstens ein Schalt-/Automatikgetriebe (30), das im Antriebsstrang zwischen dem Verbrennungsmotor (21) und den jeweiligen Achsen vorgesehen ist,
wenigstens ein Umlaufrädergetriebe (31), das mit den Abtriebsmitteln (26) der Vorderachse (12), mit der elektrischen Maschine (23) und über das Schalt-/Automatikgetriebe (30) mit dem Verbrennungsmotor (21) verbunden ist,
so dass die Antriebskraft des Verbrennungsmotors (21) und der elektrischen Maschine (23) im Umlaufrädergetriebe (31) summiert und an die Abtriebsmittel (26) der Vorderachse (12) geleitet wird, und
die Abtriebsmittel (26) der Vorderachse (12) durch den Verbrennungsmotor (21) und durch die elektrische Maschine (23) gleichzeitig angetrieben sind.

2. Antriebsstrangsystem (20),
aufweisend
wenigstens einen Verbrennungsmotor (21),
wenigstens einen Generator (22), zur Erzeugung elektrischer Energie, angetrieben durch den Verbrennungsmotor (21),
wenigstens zwei elektrische Maschinen (23, 24), die mit dem Generator (22) verbunden sind,
wenigstens eine angetriebene Vorder- und Hinterachse (12, 14), die jeweils Abtriebsmittel (26, 28) aufweisen, und die durch den Verbrennungsmotor (21) angetrieben sind,
wenigstens ein Schalt-/Automatikgetriebe (30), das im Antriebsstrang zwischen dem Verbrennungsmotor (21) und den jeweiligen Achsen vorgesehen ist,
wenigstens zwei Umlaufrädergetriebe (31, 32), die jeweils mit den Abtriebsmitteln (26) der Vorderachse (12), mit einem Vorderachsdifferential (27), und mit jeweils einer der elektrischen Maschinen (23, 24) verbunden sind,
so dass die Antriebskraft des Verbrennungsmotors (21) und der elektrischen Maschinen (23, 24) im jeweiligen Umlaufrädergetriebe (31, 32) summiert und an die jeweiligen Abtriebsmittel (26) der Vorderachse (12) geleitet wird, und
die Abtriebsmittel (26) der Vorderachse (12) durch den Verbrennungsmotor (21) und durch die elektrischen Maschinen (23, 24) gleichzeitig angetrieben sind.

3. Antriebsstrangsystem (20) nach wenigstens einem der vorhergehenden Ansprüche, wobei der Generator (22) und wenigstens eine elektrische Maschine (23) mit wenigstens einem Energiespeicher (34), einem Akkumulator oder einer Batterie verbunden sind.

4. Antriebsstrangsystem (20) nach wenigstens einem der vorhergehenden Ansprüche, wobei eine Steuerung (33) vorgesehen ist, die dazu ausgelegt ist, das Umlaufrädergetriebe (31, 32) zu steuern.

5. Antriebsstrangsystem (20) nach wenigstens einem der vorhergehenden Ansprüche, wobei das Umlaufrädergetriebe (31) ein Planetengetriebe ist.

6. Antriebsstrangsystem (20) nach wenigstens einem der vorangehenden Ansprüche, wobei die Abtriebsmittel (26, 28) Endgetriebe in Form von einem Umlaufrädergetriebe, Differentialgetriebe oder Stirnradgetriebe aufweisen.

7. Antriebsstrangsystem (20) nach wenigstens einem der vorangehenden Ansprüche, das derart ausgelegt ist, dass bei einem Bremsvorgang eine Rekuperation der Antriebsleistung erfolgt.

8. Verfahren zur Steuerung eines Antriebsstrangsystems (20), aufweisend wenigstens einen Verbrennungsmotor (21),
wenigstens einen Generator (22), zur Erzeugung elektrischer Energie, angetrieben durch den Verbrennungsmotor (21),
wenigstens eine elektrische Maschine (23), die elektrisch mit dem Generator (22) verbunden ist,
wenigstens eine angetriebene Vorder- und Hinterachse (12, 14), die jeweils Abtriebsmittel aufweisen, und die durch den Verbrennungsmotor (21) angetrieben sind,
wenigstens ein Schalt-/Automatikgetriebe (30), das im Antriebsstrang zwischen dem Verbrennungsmotor (21) und den jeweiligen Achsen vorgesehen ist,
wenigstens ein Umlaufrädergetriebe (31), das mit den Abtriebsmitteln (26) der Vorderachse (12), mit der elektrischen Maschine (23) und über das Schalt-/Automatikgetriebe (30) mit dem Verbrennungsmotor (21) verbunden ist,
wobei das Umlaufrädergetriebe (31) derart geregelt wird, dass eine Antriebsleistung an die Abtriebsmittel (26) abgegeben wird, oder eine Antriebsleistung von den Abtriebsmitteln (26) an die elektrische Maschine (23) abgegeben wird.

9. Verfahren nach Anspruch 8, wobei das Umlaufrädergetriebe (31) derart gesteuert ist, dass die Abtriebsmittel (26) der Vorderachse (12) unabhängig voneinander und von der Hinterachse (14) regelbar sind, insbesondere beschleunigbar und abbremsbar sind.

10. Verfahren nach wenigstens einem der Ansprüche 8 oder 9, wobei die Antriebsleistungsaufteilung auf die Abtriebsmittel (26, 28) der Vorder- und der Hinterachse (12, 14) regulierbar ist.
